Europäisches Patentamt

European Patent Office

Office européen des brevets

(19)

(11) Veröffentlichungsnummer: **0 127 744**
**B1**

(12) **EUROPÄISCHE PATENTSCHRIFT**

(45) Veröffentlichungstag der Patentschrift:
15.07.87

(51) Int. Cl.⁴: **G 11 B 5/52**

(21) Anmeldenummer: **84103703.9**

(22) Anmeldetag: **04.04.84**

(54) **Anordnung von rotierenden ringförmigen Transformatoren in einem Videogerät.**

(30) Priorität: **01.06.83 DE 3319878**

(43) Veröffentlichungstag der Anmeldung:
**12.12.84 Patentblatt 84/50**

(45) Bekanntmachung des Hinweises auf die Patenterteilung:
**15.07.87 Patentblatt 87/29**

(84) Benannte Vertragsstaaten:
**AT BE CH DE FR GB IT LI**

(56) Entgegenhaltungen:
**DE - A - 2 330 886**
**DE - A - 2 609 335**
**DE - A - 2 903 197**
**DE - A - 3 009 582**
**DE - A - 3 318 987**

(73) Patentinhaber: **GRUNDIG E.M.V. Elektro-Mechanische Versuchsanstalt Max Grundig holländ. Stiftung & Co. KG., Kurgartenstrasse 37, D-8510 Fürth (DE)**

(72) Erfinder: **Opelt, Christian, Fürther Strasse 36, D-8501 Veitsbronn (DE)**

ACTORUM AG

## Beschreibung

Die Erfindung betrifft eine Anordnung von rotierenden ringförmigen Transformatoren zur induktiven Übertragung hochfrequenter Schwingungen in einem Video-Aufzeichnungs- und -Wiedergabegerät mit wenigstens zwei Signal-Aufzeichnungs- und Wiedergabeknöpfen, die vorzugsweise um 180° versetzt auf einem rotierenden Kopfrad in einer Kopftrommel angeordnet sind, wobei die Transformatoren je einen rotierenden und je einen feststehenden ringförmigen Teil aufweisen, jedem Signalkopf der rotierende Teil eines Transformators in bestimmter Weise zugeordnet ist, und die Transformatoren axial übereinander angeordnet sind. Eine derartige Anordnung ist aus der DE-A-2 330 886 bekannt.

Bei den meisten bekannten magnetischen Bild-Aufzeichnungs- und -Wiedergabegeräten mit bandförmigem Aufzeichnungsmedium erfolgt die Aufzeichnung und Wiedergabe der Videosignale auf das Magnetband mittels sogenannter Schrägspuraufzeichnung bzw. Abtastung über auf einem rotierenden Kopfrad angeordnete Videoköpfe. Es ist bekannt, dass hierbei die hochfrequenten Schwingungen mit Hilfe eines rotierenden Transformators induktiv übertragen werden. Da vorzugsweise mit zwei um 180° auf dem Kopfrad versetzt angeordneten Videoköpfen gearbeitet wird, sind auch hierzu zwei getrennte rotierende Transformatoren erforderlich. Das Kopfrad mit den beiden Videoköpfen ist mit den rotierenden Transformatoren in einer vom Magnetband teilweise umschlungenen zweigeteilten Kopftrommel integriert, wobei wenigstens ein Teil der Kopftrommel feststeht. Die Unterbringung der beiden rotierenden Transformatoren erfolgt in bekannter Weise in der Kopftrommel derart, dass diese entweder axial übereinander angeordnet sind (z.B. DE-A-2 330 886), oder sich mit verschiedenen Radien der einzelnen Übertragerringe in einer Ebene befinden (z.B. DE-A-3 009 528). Ein wesentlicher Unterschied dieser verschiedenen Anordnungen ergibt sich in der Bewertung der Übersprechdämpfung von einem zum anderen rotierenden Transformator. Eine messwertmässig grosse Übersprechdämpfung ist bei Geräten der geschilderten Art in zunehmender Weise wünschenswert, da inzwischen auch das Stereo-Tonsignal im Schrägspurverfahren aufgezeichnet bzw. abgetastet wird. Es kann somit in Videoaufzeichnungsgeräten ein PCM-Tonsignal in einer Zusatzumschlingung vor oder nach der Videospur aufgezeichnet werden. Besonders hohe Anforderungen an die Übersprechdämpfung zwischen den beiden rotierenden Signalübertragern (Transformatoren) werden dann noch gestellt, wenn bei dieser genannten Technik eine Nachvertonung gewünscht wird, denn dann ist es erforderlich, dass ein Videokopf mit dem PCM-Schreibstrom angesteuert wird, während der andere Videokopf das frequenzmodulierte Videosignal ausliest. Die hierfür erforderliche hohe Übersprechdämpfung ist nach den bisher bekannten Anordnungen von rotierenden Transformatoren in der Kopftrommel eines Video-Aufzeichnungsgerätes nicht ausreichend gegeben.

Aufgabe der Erfindung ist es daher, eine Anordnung und Ausführung von wenigstens zwei rotierenden ringförmigen Transformatoren in einem Video-Aufzeichnungs- und -Wiedergabegerät zu schaffen, die einerseits ein gutes Übersprechverhalten von einem Transformator zum anderen sicherstellt und andererseits einen technisch einfachen Einbau der rotierenden Transformatoren in die Kopftrommel des Gerätes gewährleistet.

Diese Aufgabe wird erfindungsgemäss durch die im kennzeichnenden Teil des Anspruchs 1 angegebenen Merkmale gelöst.

Vorteilhafte Ausgestaltungen des erfindungsgemässen Aufbaus eines rotierenden ringförmigen Transformators in einer Kopftrommel für Videoaufzeichnungsgeräte ergeben sich aus den Unteransprüchen.

Ein Ausführungsbeispiel wird nachfolgend anhand einer schematischen Zeichnung näher erläutert.

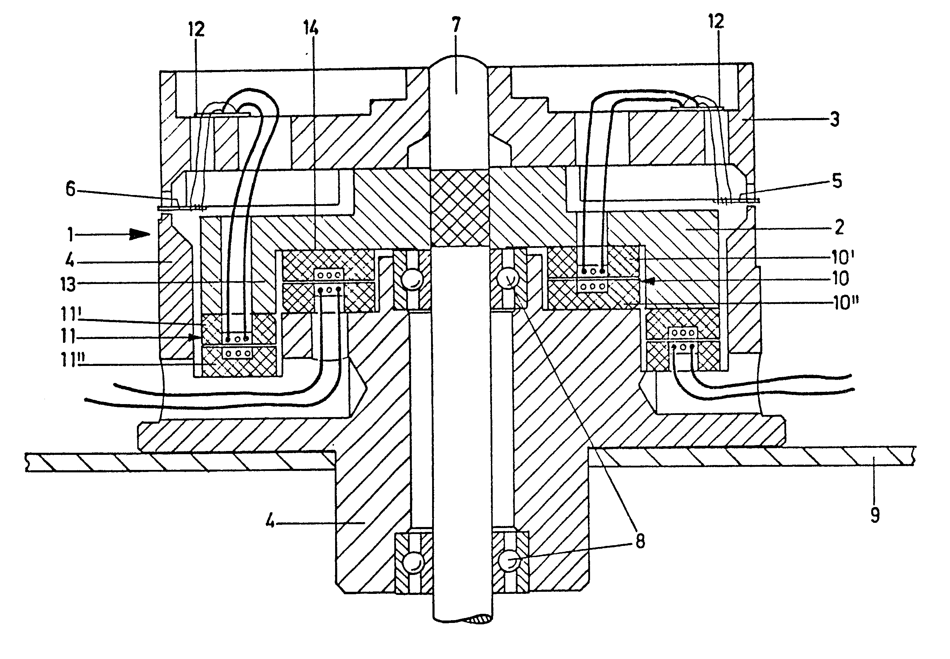

Die im Schnitt dargestellte Figur zeigt eine Kopftrommel 1 mit eingesetztem Kopfrad 2. Der obere Teil 3 der Kopftrommel ist mit dem Kopfrad drehbar in einem unteren Teil 4 der Kopftrommel gelagert. Auf beiden Seiten um 180° versetzt, sind die Signalköpfe 5 und 6 auf dem Kopfrad angeordnet. Auf einer nur teilweise dargestellten Welle 7 ist das Kopfrad aufgezogen und über zwei Kugellager 8 in der Kopftrommel gelagert. Zur Vereinfachung der dargestellten Figur ist der Antrieb der Kopftrommel nicht gezeichnet, ebenso ist der Chassisteil 9, auf dem die Kopftrommel befestigt ist, nur zeichnungsmässig angedeutet. Die beiden rotierenden Transformatoren 10 und 11 sind versetzt in der Kopftrommel angeordnet, wobei der Transformator 10 dem Signalkopf 5 und der Transformator 11 dem Signalkopf 6 zugeordnet ist. Die Anschlüsse der Signalköpfe werden jeweils über eine Kontaktplatte 12, die sich im oberen Teil der Kopftrommel befindet, zu den Transformatoren 10 und 11 geführt. Die rotierenden Transformatoren bestehen, wie bekannt, aus zwei Ringkernhälften mit eingelegten Wicklungen, wobei der jeweils rotierende Teil 10' und 11' an dem Kopfrad und der feststehende Teil 10'' und 11'' am unteren Teil der Kopftrommel befestigt ist. Die beiden Ringteile sind durch einen sehr kleinen Luftspalt getrennt. Die Anschlüsse der feststehenden Trafo-Ringteile werden in einfachster Weise über Bohrungen, die sich im unteren Teil der Kopftrommel befinden, an eine nicht näher dargestellte Schaltungsplatte geführt. Nach der Zeichnung ist der Transformator 10, der dem ersten Signalkopf 5 zugeordnet ist, gegenüber dem anderen Transformator 11, der dem zweiten Signalkopf 6 zugeordnet ist, axial verschoben und durch verschiedene Ringgrössen radial und axial nicht überschneidend in der Kopftrommel angeordnet. Um diese Anordnung zu erreichen, weist das Kopfrad 2 einen äusseren hochgezogenen Flansch 13 auf, an dem der rotierende Trafoteil 11' des Trafos 11 (mit grossem Ringdurchmesser) befestigt ist. Der rotierende Trafoteil 10' mit der geringeren Ringgrösse befindet sich hingegen auf der inneren Planseite 14 des Kopfrades. Die Höhe des Flansches entspricht bei dieser Anordnung wenigstens der gesamten Querschnittshöhe eines kompletten Transformators. Eine andere nicht dargestellte Anordnung sieht eine Flanschhöhe vor, die etwa nur der halben Querschnittshöhe des Transformators entspricht.

## Patentansprüche

1. Anordnung von rotierenden ringförmigen Transformatoren (10, 11) zur induktiven Übertragung hochfrequenter Schwingungen in einem Video-Aufzeichnungs- und -Wiedergabegerät mit wenigstens zwei Signal-Aufzeichnungs- und -Wiedergabeköpfen (5, 6), die vorzugsweise um 180° versetzt auf einem rotierenden Kopfrad (2) in einer Kopftrommel angeordnet sind, wobei die Transformatoren je einen rotierenden (10', 11') und je einen feststehenden (10'', 11'') ringförmigen Teil aufweisen, jedem Signalkopf (5, 6) der rotierende Teil eines Transformators in bestimmter Weise zugeordnet ist, und die Transformatoren (10, 11) axial übereinander angeordnet sind, dadurch gekennzeichnet, dass die Transformatoren (10, 11) verschiedene Ringgrössen derart aufweisen, dass sie radial nicht überlappen.

2. Anordnung nach Anspruch 1, dadurch gekennzeichnet, dass das Kopfrad (2) einen hochgezogenen Flansch (13) aufweist, auf den ein rotierender Trafoteil (11) aufgesetzt ist, während der andere rotierende Trafoteil mit der geringeren Ringgrösse (10') auf der inneren Planseite des Kopfrades (14) angeordnet ist, und die Höhe des Flansches wenigstens der gesamten Querschnittshöhe eines Transformators entspricht.

3. Anordnung nach Anspruch 2, dadurch gekennzeichnet, dass die Höhe des Flansches des Kopfrades der halben Querschnittshöhe des kompletten Transformators entspricht.

## Claims

1. Arrangement of rotating toroidal transformers (10, 11) for the inductive transmission of high-frequency oscillations in a video recording and playback machine with at least two signal recording and playback heads (5, 6), which are preferably arranged offset by 180° on a rotating head wheel (2) in a head drum, the transformers each having one rotating (10', 11') toroidal part and one fixed (10'', 11'') toroidal part, each signal head (5, 6) being assigned the rotating part of a transformer in a certain way, and the transformers (10, 11) being arranged axially one above the other, characterized in that the transformers (10, 11) have different ring sizes such that they do not radially overlap.

2. Arrangement according to Claim 1, characterized in that the head wheel (2) has a drawn-up flange (13), on which is mounted one rotating transformer part (11), while the other rotating transformer part, with the smaller ring size (10'), is arranged on the inner plane side of the head wheel (14), and the height of the flange is equivalent at least to the overall cross-sectional height of a transformer.

3. Arrangement according to Claim 2, characterized in that the height of the flange of the head wheel is equivalent to half the cross-sectional height of the complete transformer.

## Revendications

1. Dispositif de transformateurs (10, 11) rotatifs, annulaires, pour la transmission inductive d'oscillations de haute fréquence dans un appareil vidéo d'enregistrement et de lecture comportant au moins deux têtes d'enregistrement et de lecture de signaux (5, 6), qui sont de préférence décalées de 180° sur une roue de tête rotative (2), les transformateurs présentant chacun une partie annulaire rotative (10', 11') et une partie annulaire fixe (10'', 11''), la partie rotative d'un transformateur étant associée à chaque tête des signaux (5, 6) d'une manière déterminée, et les transformateurs (10, 11) étant superposés axialement, caractérisé en ce que les transformateurs (10, 11) présentent des anneaux de taille différente de manière qu'ils ne se recouvrent pas radialement.

2. Dispositif selon la revendication 1, caractérisé en ce que la roue de tête (2) présente une bride (13) repliée vers le haut sur laquelle est montée une partie rotative (11) dé transformateur, tandis que l'autre partie rotative de transformateur munie d'anneaux de taille plus petite (10'), est disposée sur la face intérieure plane de la roue de tête (14), et en ce que la hauteur de la bride correspond au moins à la hauteur de la section transversale totale d'un transformateur.

3. Dispositif selon la revendication 2, caractérisé en ce que la hauteur de la bride de la roue de tête est égale à la moitié de la hauteur de la section transversale du transformateur complet.

012744

5